# EUROPÄISCHE PATENTSCHRIFT

(11) **EP 4 204 255 B1**
(45) Veröffentlichungstag und Bekanntmachung des Hinweises auf die Patenterteilung: **26.02.2025**
(21) Anmeldenummer: 21801998.2
(22) Anmeldetag: 15.10.2021
(51) Int. Cl.: B60N 2/06, B60N 2/68, F16B 35/04, F16B 7/10, F16B 37/06

(54) **LÄNGSEINSTELLER, VERFAHREN ZUR MONTAGE EINES LÄNGSEINSTELLERS UND FAHRZEUGSITZ**
LONGITUDINAL ADJUSTER, METHOD FOR ASSEMBLING A LONGITUDINAL ADJUSTER, AND VEHICLE SEAT
SYSTÈME DE RÉGLAGE EN LONGUEUR, PROCÉDÉ DE MONTAGE D'UN SYSTÈME DE RÉGLAGE EN LONGUEUR ET SIÈGE DE VÉHICULE

(30) Priorität: 16.10.2020 DE 102020127390; 14.01.2021 DE 102021100601
(43) Veröffentlichungstag der Anmeldung: 05.07.2023
(73) Patentinhaber: Adient US LLC, Plymouth MI 48170 (US)
(72) Erfinder: SPRENGER, Erik, 42929 Wermelskirchen (DE); ROVNY, Maros, 913 05 Adamovské Kochanovce (SK)
(74) Vertreter: Liedtke & Partner Patentanwälte
(86) Internationale Anmeldenummer: PCT/IB2021/059515
(87) Internationale Veröffentlichungsnummer: WO 2022/079685

(56) Entgegenhaltungen:
- GB-A- 2 218 171
- JP-A- 2008 056 003
- US-A1- 2005 214 099

## Beschreibung

Die Erfindung betrifft einen Längseinsteller, aufweisend mindestens ein Schienenpaar, welches aus einer ersten Schiene und einer zweiten Schiene gebildet ist, wobei die erste Schiene und die zweite Schiene, insbesondere in einer Längsrichtung, relativ zueinander verschiebbar sind, wobei die erste Schiene und die zweite Schiene unter Bildung eines Innenkanals einander wechselseitig umgreifen, wobei in dem Innenkanal eine mit der zweiten Schiene verbundene Spindelmutter und eine mit der Spindelmutter wirkverbundene Spindel angeordnet sind, wobei an der ersten Schiene ein mittels eines Motors antreibbares und mit der Spindel zusammenwirkendes Spindelgetriebe angeordnet ist, wobei die Spindelmutter mittels eines ersten Fixierelements und eines zweiten Fixierelements an der zweiten Schiene fixiert ist. Die Erfindung betrifft ferner ein Verfahren zur Montage eines solchen Längseinstellers sowie einen Fahrzeugsitz.

### Stand der Technik

Aus der DE 10 2017 218 492 A1 ist ein gattungsgemäßer Längseinsteller für einen Fahrzeugsitz bekannt, der Längseinsteller aufweisend mindestens ein Schienenpaar, welches aus einer ersten Sitzschiene und einer relativ zu der ersten Sitzschiene in Längsrichtung verschiebbaren zweiten Sitzschiene gebildet ist, wobei die Sitzschienen unter Bildung eines Innenkanals einander wechselseitig umgreifen, wobei in dem Innenkanal eine mit der zweiten Sitzschiene gelagerte Spindelmutter und eine mit der Spindelmutter wirkverbundene Spindel angeordnet sind, wobei an einem vorderen Ende der ersten Sitzschiene ein mittels eines Motors antreibbares und mit der Spindel zusammenwirkendes Getriebe angeordnet ist, wobei die Spindel an einem vorderen Endabschnitt der Spindel in dem Getriebe und an einem hinteren Endabschnitt der Spindel in einem Drehlager der ersten Sitzschiene gelagert ist. Die Spindelmutter ist mittels zweiter Fixierelemente an der zweiten Schiene fixiert.

Aus der DE 10 2005 023 095 A1 ist eine Antriebsvorrichtung für einen Kraftfahrzeugsitz in einer Gleitvorrichtung bekannt. Die Antriebsvorrichtung zur Anwendung mit einer Kraftfahrzeugsitz-Gleitvorrichtung umfasst zusammenpassende feste und bewegliche Schienenteile, die zwischen einer vorderen Stellung und einer hinteren Stellung bewegt werden können. Die Antriebsvorrichtung umfasst eine verlängerte Spindel, eine Spindelmutter, ein Getriebe und eine Einbauvorrichtung. Die Spindel definiert eine Spindelachse und hat ein sich in Längsrichtung erstreckendes Spindelgewinde. Die Spindelmutter kann sicher auf einem ersten Schienenteil befestigt werden und hat ein Innengewinde, das in das Spindelgewinde eingreifen kann. Das Getriebe kann an ein jeweils anderes Schienenteil montiert werden und dreht selektiv die Spindel um die Spindelachse. Die Spindel der Antriebsvorrichtung ist mit einem Spindelrad versehen, das sich in montiertem Zustand der Antriebsvorrichtung durch Spindelradöffnungen des beweglichen Schienenteils nach außen erstreckt.

Aus der DE 10 2006 000 193 A1 ist eine Sitzgleitvorrichtung bekannt, welche ein System mit einer schwimmenden Gewindespindel und einer feststehenden Mutter aufweist. Die Mutter ist an der unteren Schiene befestigt, während sich die Gewindespindel durch sie dreht, so dass sich die obere Struktur vorwärts und rückwärts bewegen kann. Sobald dieses System angewendet wird, wird die Mutter an der unteren Schiene befestigt.

Aus der DE 10 2019 122 928 B3 ist ein Längseinsteller bekannt, aufweisend mindestens ein Schienenpaar, welches aus einer zweiten Schiene und einer relativ zu der zweiten Schiene in Längsrichtung verschiebbaren ersten Schiene gebildet ist, wobei die Schienen unter Bildung eines Innenkanals einander wechselseitig umgreifen, wobei in dem Innenkanal eine mit der zweiten Schiene gelagerte Spindelmutter und eine mit der Spindelmutter wirkverbundene Spindel angeordnet sind, wobei an einem Ende der ersten Schiene ein mittels eines Motors antreibbares und mit der Spindel zusammenwirkendes Getriebe angeordnet ist. Die Spindelmutter ist mittels zweier Crashbolzen mit der zweiten Schiene verbunden, wobei zwischen einem jeden Crashbolzen und der zweiten Schiene jeweils ein umlaufender Spalt vorgesehen ist.

Aus der JP 2008-56 003 A ist eine elektrische Sitzgleitvorrichtung bekannt, mit einer unteren Schiene und einer oberen Schiene, wobei die obere Schiene relativ zu der unteren Schiene verschiebbar ist, einer Spindel, die an einer Innenseite der oberen Schiene drehbar gelagert ist, und einem Mutterelement, das auf die Spindel aufgeschraubt und an der unteren Schiene durch zwei Bolzen fixiert ist. Die zwei Bolzen sind in zwei in der unteren Schiene ausgebildeten Durchgangslöchern angeordnet, wobei ein Bewegungsspielraum der Bolzen zwischen den Bolzen und einer jeweiligen inneren Umfangsfläche des Durchgangslochs ausgebildet ist.

Aus der DE 10 2008 024 141 A1 ist eine Spindel-Lageranordnung für ein Sitzlängsverstellgetriebe bekannt, welche ein Gehäuse aufweist, das mit einer Befestigungsanordnung an einer fahrzeugseitigen Komponente oder an einer sitzseitigen Komponente befestigbar ist, wobei eine Spindelöffnung zum Durchführen einer Spindel längs einer Spindelöffnungsachse durch das Gehäuse durchführt und wobei ein Innengewinde im Gehäuse im Bereich von dessen Spindelöffnung zum Eingreifen in eine derart hindurchgeführte Spindel ausgebildet ist zum Verstellen des Gehäuses und der Spindel relativ zueinander längs der Spindelöffnungsachse. Die Spindel-Lageranordnung sieht vor, dass das Innengewinde in einer Spindelmutter ausgebildet ist und die Spindelmutter im Gehäuse relativ zu der Spindelöffnungsachse verstellbar gelagert ist.

### Aufgabe

Der Erfindung liegt die Aufgabe zu Grunde, einen Längseinsteller eingangs genannter Art zu verbessern, insbesondere einen Längseinsteller zur Verfügung zu stellen, dessen Spindelmutter sich im Längseinsteller einfach positionieren lässt und einfach zu montieren ist. Ferner ist es eine zugrundeliegende Aufgabe ein entsprechendes Verfahren zur Montage eines Längseinstellers, sowie einen entsprechenden Fahrzeugsitz bereitzustellen.

### Lösung

Diese Aufgabe wird erfindungsgemäß gelöst durch einen Längseinsteller mit den Merkmalen des Anspruchs 1.

Die Längserstreckung der zweiten Schiene verläuft vorzugsweise parallel zu einer Längsrichtung. Die Spindelmutter ist mittels der beiden Fixerelemente in einer Querrichtung zentriert. Die Spindelmutter ist mittels der beiden Fixerelemente vorzugsweise horizontal zentriert. Die Querrichtung liegt bei ordnungsgemäßer Verwendung des Längseinstellers in einem Fahrzeug vorzugsweise in einer horizontalen Ebene, vorausgesetzt das Fahrzeug bewegt sich auf einer horizontalen Fahrbahn.

Die erste Schiene ist bevorzugt eine mit einem Fahrzeugsitz verbindbare Sitzschiene. Die zweite Schiene ist bevorzugt eine mit einer Fahrzeugstruktur verbindbare Bodenschiene. Ein möglicher Aufbau des Spindelgetriebes sowie dessen Funktion sind beispielsweise aus der DE 10 2013 207 665 A1 bekannt.

Die Spindel kann an einem vorderen Endabschnitt der Spindel in dem Spindelgetriebe und/oder an einem hinteren Endabschnitt der Spindel in einem Drehlager der ersten Schiene gelagert sein.

Die Spindelmutter kann einen Grundkörper aufweisen. Die Spindelmutter kann eine, insbesondere parallel zu der Längsrichtung, durchgehende Gewindebohrung mit einem Innengewinde aufweisen. Das Innengewinde der Spindelmutter kann mit einem Außengewinde der Spindel in Wirkverbindung stehen. Die Spindel ist vorzugsweise in die Spindelmutter eingeschraubt. Die Spindelmutter ist vorzugsweise einteilig ausgestaltet.

Die beiden Fixierelemente können jeweils einen ein Außengewinde aufweisenden Schaft und einen Kopfabschnitt aufweisen. Die beiden Fixierelemente weisen zwischen dem Schaft und dem Kopfabschnitt in einem Übergangsbereich zwischen dem Schaft und dem Kopfabschnitt vorzugsweise einen Konus auf.

Die erste Durchgangsöffnung kann einen im Wesentlichen quadratischen Querschnitt mit abgerundeten Ecken aufweisen. Unter "im Wesentlichen quadratisch" im Sinne der Erfindung ist zu verstehen, dass zwischen einer Länge und einer Breite des Querschnitts ein geringfügiger Unterschied von bis zu 1 Millimeter zusätzlich zu einer Fertigungstoleranz, insbesondere um bis zu 0,5 Millimeter zusätzlich zu einer Fertigungstoleranz, möglich sind. Dabei wird die Länge vorzugsweise in Längsrichtung und die Breite vorzugsweise in Querrichtung gemessen.

Die zweite Durchgangsöffnung kann einen im Wesentlichen rechteckigen Querschnitt mit abgerundeten Ecken aufweisen. Unter "im Wesentlichen rechteckig" im Sinne der Erfindung ist zu verstehen, dass zwischen einer Länge und einer Breite des Querschnitts ein Unterschied von wenigstens 1 Millimeter zusätzlich zu einer Fertigungstoleranz, insbesondere von wenigstens 1,5 Millimeter zusätzlich zu einer Fertigungstoleranz, vorgesehen sind. Dabei wird die Länge vorzugsweise in Längsrichtung und die Breite vorzugsweise in Querrichtung gemessen.

Die beiden Durchgangsöffnungen können senkrecht zur Längserstreckung der zweiten Schiene, insbesondere in Querrichtung, untereinander die gleiche Abmessung aufweisen. Eine Abmessung der ersten Durchgangsöffnung parallel zur Längserstreckung der zweiten Schiene kann von einer Abmessung der zweiten Durchgangsöffnung parallel zur Längserstreckung der zweiten Schiene abweichend ausgestaltet sein. Unter parallel zur Längserstreckung ist insbesondere in Richtung der Längserstreckung zu verstehen.

Der Konus des jeweiligen Fixierelements kann in einem dem jeweiligen Kopfabschnitt angrenzenden Bereich einen Durchmesser, insbesondere einen maximalen Durchmesser, aufweisen, welcher geringfügig größer ist als die Abmessung der jeweiligen Durchgangsöffnung senkrecht zur Längserstreckung, insbesondere in Querrichtung, der zweiten Schiene.

Die Abmessung der zweiten Durchgangsöffnung in Richtung der Längserstreckung der zweiten Schiene kann größer sein als ein Durchmesser, insbesondere maximaler Durchmesser, des Konus des zweiten Fixierelements. In montiertem Zustand kann in Längserstreckung der zweiten Schiene vor und/oder hinter dem Fixierelement zwischen dem Konus des zweiten Fixierelements und wenigstens einem Randabschnitt der zweiten Durchgangsöffnung ein Spalt vorhanden sein. Das zweite Fixerelement kann in der zweiten Durchgangsöffnung parallel zur Längserstreckung der zweiten Schiene ein Spiel aufweist.

Zur Verbindung mit den Fixierelementen kann die Spindelmutter jeweils eine Fixieröffnung aufweisen. Ein Innendurchmesser der Fixieröffnung ist bevorzugt an einen Außendurchmesser des Fixiermittels angepasst. Das Fixiermittel kann eine Schraube sein. Das Fixiermittel kann ein Bolzen, insbesondere ein Gewindebolzen, sein.

Zwischen der Spindelmutter, insbesondere dem Grundkörper der Spindelmutter, und der zweiten Schiene kann ein Puffer angeordnet sein. Der Puffer ist bevorzugt flach ausgestaltet. Der Puffer kann aus einem Kunststoff, insbesondere einem Gummi, gefertigt sein. Der Puffer kann aus Metall gefertigt sein. Der Puffer kann einerseits aus Metall und andererseits aus Kunststoff oder Gummi gefertigt sein. Dabei kann eine Seite des Puffers aus Metall gefertigt sein und eine andere Seite des Puffers aus Kunststoff und/oder Gummi gefertigt sein.

Die Aufgabe wird ferner erfindungsgemäß gelöst durch ein Verfahren zur Montage eines Längseinstellers, insbesondere eines Längseinstellers gemäß der vorstehenden Beschreibung, gemäß den Merkmalen des Anspruchs 11.

Bevorzugt weist jedes der beide Fixierelemente in einem Übergangsbereich zwischen einem Schaft und einem Kopfabschnitt einen Konus auf. Die beiden Fixierelemente können identisch ausgestaltet sein.

Das Anordnen der Spindelmutter an der zweiten Schiene kann unter Zwischenlage eines Puffers erfolgen. Der Puffer ist bevorzugt flach ausgestaltet. Der Puffer kann aus einem Kunststoff, insbesondere einem Gummi, gefertigt sein. Der Puffer kann aus Metall gefertigt sein. Der Puffer kann einerseits aus Metall und andererseits aus Kunststoff oder Gummi gefertigt sein. Dabei kann eine Seite des Puffers aus Metall gefertigt sein und eine andere Seite des Puffers aus Kunststoff und/oder Gummi gefertigt sein.

Das erste Fixierelement kann sich beim Einsetzen des ersten Fixierelements in die erste Durchgangsöffnung mittels des Konus sowohl parallel zu einer Längserstreckung der zweiten Schiene als auch senkrecht hierzu, insbesondere in Querrichtung, in der ersten Durchgangsöffnung selbst zentrieren. Das zweite Fixierelement kann sich beim Einsetzen des zweiten Fixierelements in die zweite Durchgangsöffnung mittels des Konus bevorzugt ausschließlich senkrecht zu der Längserstreckung der zweiten Schiene, insbesondere in Querrichtung, in der zweiten Durchgangsöffnung selbst zentrieren.

Die Aufgabe wird ferner erfindungsgemäß gelöst durch einen Fahrzeugsitz mit einem zuvor beschriebenen Längseinsteller.

Zusammenfassend und mit anderen Worten ausgedrückt erfolgt eine Befestigung der Spindelmutter zu der Unterschiene im Stand der Technik typischerweise mit zwei bis drei Schrauben. Die Befestigungslöcher in der Unterschiene für diese Schrauben sind im Durchmesser größer als ein Schaft der Schraube um Toleranzen auszugleichen und eine saubere Kopfauflage eines Schraubenkopfes der Schrauben zu gewährleisten. Hierdurch ist jedoch ein aktives Ausrichten der Spindelmutter innerhalb der Unterschiene über zusätzliche Aufnahmen während des Verschraubungsprozesses erforderlich.

Gemäß vorliegender Erfindung können die Schrauben zur Befestigung der Spindelmutter einen Konus zwischen dem Schraubenkopf und dem Schaft der jeweiligen Schraube aufweisen. Dieser Konus ist bevorzugt so ausgelegt, dass er über alle Toleranzen eine Zentrierung der Schraube in Querrichtung zu einer entsprechenden Durchgangsöffnung in der Unterschiene erzielt.

Damit die Schraube bis zur Kopfauflage anziehbar ist, kann die Durchgangsöffnung so ausgeführt sein, dass der Konus nur in einer geringen Kontaktfläche, insbesondere in einem schmalen Abschnitt, mit einem Randbereich der Durchgangsöffnung der Unterschiene in Kontakt ist. Dies kann mittels eines Rechtecklochs erfolgen, welches zu der Querrichtung der Unterschiene annähernd dieselbe Dimension wie in Längsrichtung aufweist. Ein zweites Rechteckloch weist eine schmalere Abmessung in Querrichtung der Unterschiene und geringfügig größer in der Längsrichtung der Unterschiene auf. Hierdurch weist das zweite Rechteckloch in Längsrichtung ein Spiel auf, um Längstoleranzen ausgleichen zu können. Durch die geringe Kontaktfläche kann der Konus der Schraube die Kontaktkante in der Durchgangsöffnung verformen und die Kopffläche der Schraube gelangt sicher in Anlage.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: einen erfindungsgemäßen Fahrzeugsitz,
- Fig. 2:: eine perspektivische Ansicht eines erfindungsgemäßen Längseinstellers des Fahrzeugsitzes aus Fig. 1,
- Fig. 3:: eine perspektivische Ansicht eines Schienenpaares des Längseinstellers aus Fig. 2,
- Fig. 4:: einen Längsschnitt des Schienenpaares aus Fig. 3,
- Fig. 5:: ausschnittsweise eine Explosionsdarstellung des Schienenpaares aus Fig. 3, wobei eine zweite Schiene, ein Puffer, eine Spindelmutter und zwei Fixierelemente dargestellt sind,
- Fig. 6:: eine teilgeschnittene Ansicht von oben auf die in der zweiten Schiene angeordneten Fixierelemente,
- Fig. 7:: ein Querschnitt durch die Spindelmutter des Schienenpaares aus Fig. 3, und
- Fig. 8:: ausschnittsweise eine Vergrößerung der Darstellung von Fig. 4 im Bereich der Spindelmutter.

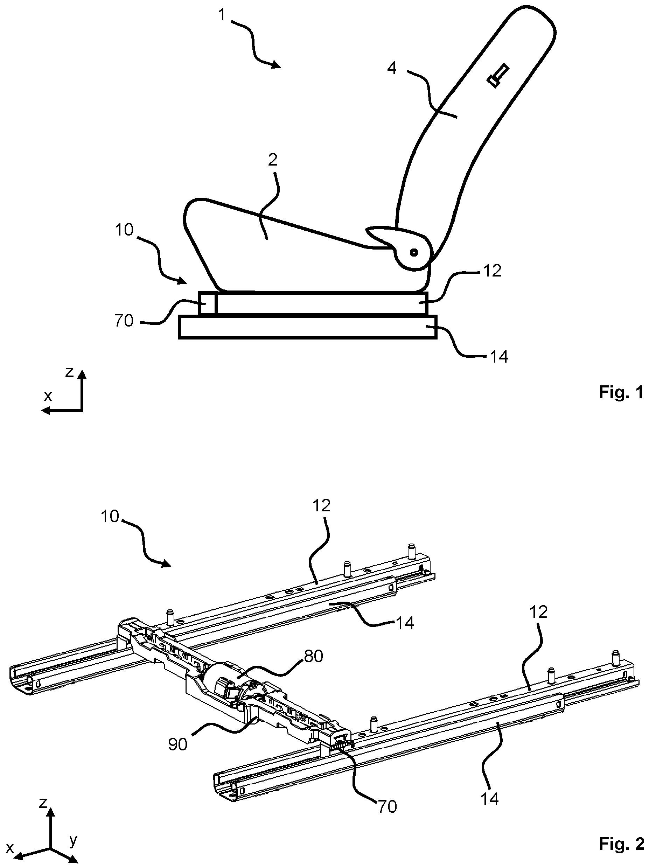

Ein in Figur 1 schematisch dargestellter Fahrzeugsitz 1 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeugs entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse. Die Längsrichtung x und die Querrichtung y können eine horizontale Ebene definieren.

Die verwendeten Positionsangaben und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrechtstehender Rückenlehne 4 und wie üblich in Fahrtrichtung ausgerichtet ist. Der Fahrzeugsitz 1 kann jedoch auch in abweichender Ausrichtung, beispielsweise quer zu der Fahrtrichtung verbaut werden.

Der in Fig. 1 gezeigte Fahrzeugsitz 1 für ein Kraftfahrzeug weist ein Sitzteil 2 und eine relativ zu dem Sitzteil 2 in ihrer Neigung einstellbare Rückenlehne 4 auf. Eine Neigung der Rückenlehne 4 kann beispielsweise mittels eines Rastbeschlages oder eines Getriebebeschlages einstellbar sein. Der Fahrzeugsitz 1 ist zur Einstellung einer Sitzlängsposition auf einem Längseinsteller 10 montiert.

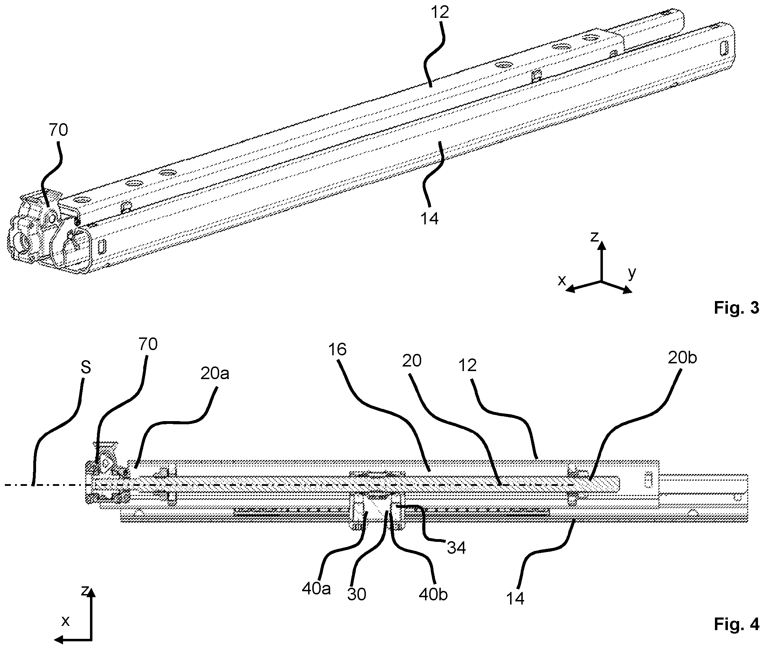

Fig. 2 zeigt den erfindungsgemäßen Längseinsteller 10, des Fahrzeugsitzes 1. Der Längseinsteller 10 weist wenigstens ein Schienenpaar, vorliegend zwei Schienenpaare auf. Fig. 3 zeigt eines der Schienenpaare des Längseinstellers 10.

Die Schienenpaare sind jeweils aus einer ersten Schiene 12, insbesondere zur Verbindung mit einer Sitzstruktur des Fahrzeugsitzes 1, und einer zweiten Schiene 14, insbesondere zur Verbindung mit einer Fahrzeugstruktur, gebildet. Die Schienen 12, 14 des Schienenpaares sind in Längsrichtung x relativ zueinander verschiebbar und umgreifen unter Bildung eines Innenkanals 16 einander wechselseitig. In dem Innenkanal 16 ist eine an der zweiten Schiene 14 gelagerte, vorliegend drehfest angeordnete Spindelmutter 30 und eine mit der Spindelmutter 30 wirkverbundene Spindel 20 angeordnet. Die Spindel 20 erstreckt sich entlang einer Spindelachse S parallel zu der Längsrichtung x. An einem vorderen Ende der ersten Schiene 12 ist ein mittels eines Motors 80 antreibbares und die Spindel 20 antreibendes Spindelgetriebe 70 angeordnet. Der Motor 80 ist auf einem zwischen den beiden Spindelgetrieben 70 der jeweiligen Schienenpaare montierten Motorträger 90 gehalten und treibt mittels einer in Fig. 2 nicht dargestellten Welle die beiden Spindelgetriebe 70 an.

Fig. 4 zeigt einen Längsschnitt des Schienenpaares von Fig. 3. Das Spindelgetriebe 70 lagert einen vorderen Endabschnitt 20a der Spindel 20. Die Spindelmutter 30 ist in vorliegend dargestelltem Zustand mittig entlang der Länge der Spindel 20 angeordnet. Durch ein Drehen der Spindel 20 um die Spindelachse S schraubt sich die Spindelmutter 30 in Abhängigkeit der Drehrichtung entlang eines Außengewindes der Spindel 20 in oder entgegen der Längsrichtung x und verschiebt dadurch die erste Schiene 12 relativ zu der zweiten Schiene 14. Dabei verschiebt sich entsprechend auch eine Relativposition zwischen der Spindel 10 und der Spindelmutter 30. Die Spindelmutter 30 weist parallel zu der Längsrichtung x eine durchgehende Gewindebohrung mit einem Innengewinde 32 auf. Das Innengewinde 32 der Spindelmutter 30 kann mit einem Außengewinde der Spindel 20 in Wirkverbindung stehen. Die Spindelmutter 30 ist vorliegend einteilig ausgestaltet.

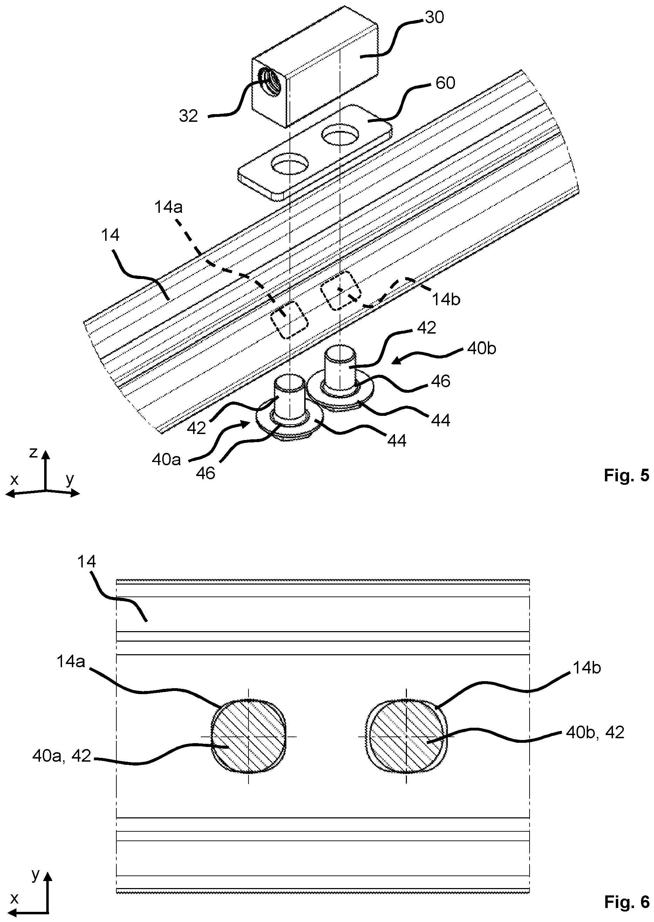

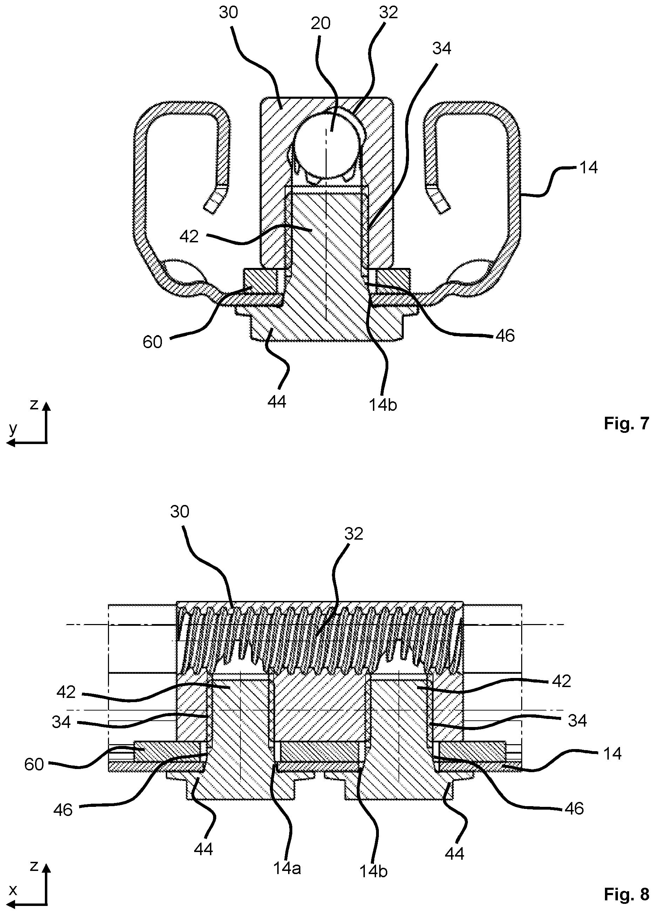

Die Figuren 5 bis 8 zeigen verschiedene Ansichten einer zweiten Schiene 14 mit einem Puffer 60, der Spindelmutter 30 und zwei Fixierelementen 40a, 40b.

Die Spindelmutter 30 ist vorliegend einteilig ausgestaltet. Die Spindelmutter 30 ist mittels der beiden Fixerelemente 40a, 40b an der zweiten Schiene 14 befestigt. Die Spindelmutter 30 ist mittels der beiden Fixerelemente 40a, 40b senkrecht zu einer Längserstreckung der zweiten Schiene 14 relativ zu einer jeweiligen Durchgangsöffnung 14a, 14b der zweiten Schiene 14, insbesondere einer ersten Durchgangsöffnung 14a und einer zweiten Durchgangsöffnung 14b, zentriert. Die Spindelmutter 30 ist mittels der beiden Fixerelemente 40a, 40b horizontal zentriert, falls die Längserstreckung der zweiten Schiene 14 parallel zu der Längsrichtung x verläuft. Die Spindelmutter 30 ist mittels der beiden Fixerelemente 40a, 40b insbesondere in Querrichtung y zentriert,

Die Spindelmutter 30 weist für jede der Fixierelemente 40a, 40b eine Fixieröffnung 34 auf. Zwischen der zweiten Schiene 14 und der Spindelmutter 30 ist ein Puffer 60 angeordnet. Der Puffer 60 weist für jedes der beiden Fixierelemente 40a, 40b jeweils ein Durchgangsloch auf. Randbereiche der Durchgangslöcher des Puffers 60 stehen in montiertem Zustand nicht notwendigerweise mit den Fixierelementen 40a, 40b in Kontakt.

Das erste Fixierelement 40a und das zweite Fixierelement 40b sind vorliegend Schrauben. Das erste Fixierelement 40a und das zweite Fixierelement 40b sind untereinander Gleichteile. Die beiden Fixierelemente 40a, 40b weisen jeweils in einem Übergangsbereich zwischen einem Schaft 42 und einem Kopfabschnitt 44 einen Konus 46 auf. Vorliegend weist der Schaft 42 eines jeden Fixierelements 40a, 40b ein Außengewinde auf.

Die erste Durchgangsöffnung 14a weist, insbesondere vor der Montage der Spindelmutter 30 und des ersten Fixierelements 40a, einen im Wesentlichen quadratischen Querschnitt mit abgerundeten Ecken auf. Das erste Fixierelement 40a ist in der ersten Durchgangsöffnung 14a angeordnet. Vor der Montage der Spindelmutter 30 und des ersten Fixierelements 40a ist die Abmessung der ersten Durchgangsöffnung 14a senkrecht zur Längserstreckung der zweiten Schiene 14, insbesondere in Querrichtung y, geringfügig kleiner ausgestaltet als der größte Durchmesser des Konus 46 des ersten Fixierelements 40a in einem dem Kopfabschnitt 44 des ersten Fixierelements 40a angrenzenden Bereich. In einem Zustand vor der Montage des ersten Fixierelements 40a, ist die Abmessung der ersten Durchgangsöffnung 14a parallel zur Längserstreckung der zweiten Schiene 14 gleich der Abmessung der ersten Durchgangsöffnung 14a senkrecht zur Längserstreckung der zweiten Schiene 14, insbesondere in Querrichtung y.

Während der Montage der Spindelmutter 30 und des ersten Fixierelements 40a erfolgt durch den Konus 46 des ersten Fixierelements 40a eine geringfügige Verformung der von dem Konus 46 kontaktierten Randbereichen der ersten Durchgangsöffnung 14a. Die von dem Konus 46 kontaktierten Randbereiche der ersten Durchgangsöffnung 14a sind in montiertem Zustand des ersten Fixierelements 40a durch Verdrängung durch den Konus 46 derart verformt, dass der Konus 46 des ersten Fixierelements 40a gleichmäßig mit den Randbereichen der ersten Durchgangsöffnung 14a und der Kopfabschnitt 44 des ersten Fixierelements 40a sicher in Anlage mit der zweiten Schiene 14 gelangt.

Die zweite Durchgangsöffnung 14b weist einen im Wesentlichen rechteckigen Querschnitt mit abgerundeten Ecken auf. Das zweite Fixierelement 40b ist in der zweiten Durchgangsöffnung 14b angeordnet. Vor der Montage der Spindelmutter 30 und des zweiten Fixierelements 40b ist die Abmessung der zweiten Durchgangsöffnung 14b senkrecht zur Längserstreckung der zweiten Schiene 14, insbesondere in Querrichtung y, geringfügig kleiner ausgestaltet als der größte Durchmesser des Konus 46 des zweiten Fixierelements 40b in einem dem Kopfabschnitt 44 des zweiten Fixierelements 40b angrenzenden Bereich. Die Abmessung der zweiten Durchgangsöffnung 14b parallel zur Längserstreckung der zweiten Schiene 14 ist größer als der größte Durchmesser des Konus 46 des zweiten Fixierelements 40b.

Parallel zur Längserstreckung der zweiten Schiene 14 ist zwischen dem zweiten Fixerelement 40b und den Randbereichen der zweiten Durchgangsöffnung 14b ein Spiel vorgesehen.

Während der Montage der Spindelmutter 30 und des zweiten Fixierelements 40b erfolgt durch den Konus 46 des zweiten Fixierelements 40b eine geringfügige Verformung der von dem Konus 46 kontaktierten Randbereichen der zweiten Durchgangsöffnung 14b, insbesondere den parallel zur Längserstreckung der zweiten Schiene 14 seitlich angeordneten Randbereichen der zweiten Durchgangsöffnung 14b. Die von dem Konus 46 kontaktierten Randbereiche der zweiten Durchgangsöffnung 14b sind in montiertem Zustand des zweiten Fixierelements 40b durch Verdrängung durch den Konus 46 derart verformt, dass der Konus 46 des zweiten Fixierelements 40b mittig zwischen den kontaktierten gegenüberliegenden Randbereichen der zweiten Durchgangsöffnung 14b ausgerichtet ist und der Kopfabschnitt 44 des zweiten Fixierelements 40b sicher in Anlage mit der zweiten Schiene 14 gelangt.

Die in der vorstehenden Beschreibung, den Ansprüchen und den Figuren offenbarten Merkmale können sowohl einzeln als auch in Kombination für die Verwirklichung der Erfindung in ihren verschiedenen Ausgestaltungen von Bedeutung sein, solange der resultierende Gegenstand zum Schutzumfang gehört, der durch die Ansprüche definiert ist.

### Bezugszeichenliste

- 1: Fahrzeugsitz
- 2: Sitzteil
- 4: Rückenlehne
- 10: Längseinsteller
- 12: erste Schiene
- 14: zweite Schiene
- 14a: erste Durchgangsöffnung
- 14b: zweite Durchgangsöffnung
- 16: Innenkanal
- 20: Spindel
- 20a: vorderer Endabschnitt (der Spindel 20)
- 20b: hinterer Endabschnitt (der Spindel 20)
- 30: Spindelmutter
- 32: Innengewinde
- 34: Fixieröffnung
- 40a: erstes Fixierelement
- 40b: zweites Fixierelement
- 42: Schaft
- 44: Kopfabschnitt
- 46: Konus
- 60: Puffer
- 70: Spindelgetriebe
- 80: Motor
- 90: Motorträger
- S: Spindelachse (der Spindel 20)
- x: Längsrichtung
- y: Querrichtung
- z: Vertikalrichtung

## Patentansprüche

1. Längseinsteller (10), aufweisend mindestens ein Schienenpaar, welches aus einer ersten Schiene (12) und einer zweiten Schiene (14) gebildet ist, wobei die erste Schiene (12) und die zweite Schiene (14), insbesondere in einer Längsrichtung (x), relativ zueinander verschiebbar sind, wobei die erste Schiene (12) und die zweite Schiene (14) unter Bildung eines Innenkanals (16) einander wechselseitig umgreifen, wobei in dem Innenkanal (16) eine mit der zweiten Schiene (14) verbundene Spindelmutter (30) und eine mit der Spindelmutter (30) wirkverbundene Spindel (20) angeordnet sind, wobei an der ersten Schiene (12) ein mittels eines Motors (80) antreibbares und mit der Spindel (20) zusammenwirkendes Spindelgetriebe (70) angeordnet ist, wobei die Spindelmutter (30) mittels eines ersten Fixierelements (40a) und eines zweiten Fixierelements (40b) an der zweiten Schiene (14) fixiert ist, **dadurch gekennzeichnet, dass**
die Spindelmutter (30) mittels der beiden Fixierelemente (40a, 40b) senkrecht zu einer Längserstreckung der zweiten Schiene (14) in einer Querrichtung (y) zentriert ist, indem das erste Fixerelement (40a) relativ zu einer ersten Durchgangsöffnung (14a) fixiert ist und das zweite Fixerelement (40b) relativ zu einer zweiten Durchgangsöffnung (14b) fixiert ist, wobei das erste Fixierelement (40a) relativ zu der ersten Durchgangsöffnung (14a) und das zweite Fixierelement (40b) relativ zu der zweiten Durchgangsöffnung (14b) senkrecht zu der Längserstreckung der zweiten Schiene (14) in der Querrichtung (y) zentriert sind.

2. Längseinsteller (10) gemäß Anspruch 1, wobei das erste Fixierelement (40a) sich beim Einsetzen in die erste Durchgangsöffnung (14a) mittels eines Konus (46) sowohl in Längsrichtung (x) der zweiten Schiene (14) als auch senkrecht hierzu in Querrichtung (y) selbst zentriert.

3. Längseinsteller (10) gemäß Anspruch 1 oder 2, wobei die beiden Fixierelemente (40a, 40b) jeweils einen, ein Außengewinde aufweisenden, Schaft (42) und einen Kopfabschnitt (44) aufweisen, wobei jeweils ein Übergangsbereich zwischen dem Schaft (42) und dem Kopfabschnitt (44) einen Konus (46) aufweist.

4. Längseinsteller (10) gemäß einem der Ansprüche 1 bis 3, wobei die erste Durchgangsöffnung (14a) einen im Wesentlichen quadratischen Querschnitt mit abgerundeten Ecken aufweist.

5. Längseinsteller (10) gemäß einem der Ansprüche 1 bis 4, wobei die zweite Durchgangsöffnung (14b) einen im Wesentlichen rechteckigen Querschnitt mit abgerundeten Ecken aufweist.

6. Längseinsteller (10) gemäß einem der Ansprüche 1 bis 5, wobei die Abmessungen der beiden Durchgangsöffnungen (14a, 14b) senkrecht zur Längserstreckung der zweiten Schiene (14) in Querrichtung (y) identisch sind.

7. Längseinsteller (10) gemäß einem der Ansprüche 3 bis 6, wobei der Konus (46) des jeweiligen Fixierelements (40a, 40b) in einem dem jeweiligen Kopfabschnitt (44) angrenzenden Bereich einen Durchmesser aufweist, wobei vor der Montage des Fixierelements (40a, 40b) die Abmessung der jeweiligen Durchgangsöffnung (14a, 14b) senkrecht zur Längserstreckung der zweiten Schiene (14) in Querrichtung (y) geringfügig kleiner ist als der Durchmesser des Konus (46).

8. Längseinsteller (10) gemäß einem der Ansprüche 3 bis 7, wobei die Abmessung der zweiten Durchgangsöffnung (14b) in Richtung der Längserstreckung der zweiten Schiene (14) größer ist als der Durchmesser des Konus (46) des zweiten Fixierelements (40b).

9. Längseinsteller (10) gemäß einem der Ansprüche 1 bis 8, wobei das zweite Fixerelement (40b) in der zweiten Durchgangsöffnung (14b) in Richtung der Längserstreckung der zweiten Schiene (14) ein Spiel aufweist.

10. Längseinsteller (10) gemäß einem der Ansprüche 1 bis 9, wobei zwischen der zweiten Schiene (14) und der Spindelmutter (30) ein Puffer (60) angeordnet ist.

11. Verfahren zur Montage eines Längseinstellers (10), das Verfahren aufweisend die folgenden Verfahrensschritte:
a) Bereitstellen einer zweiten Schiene (14), wobei die zweite Schiene (14) zur Befestigung einer Spindelmutter (30) eine erste Durchgangsöffnung (14a) und eine zweite Durchgangsöffnung (14b) aufweist,
b) Anordnen der Spindelmutter (30) an der zweiten Schiene (14),
c) Einsetzen eines ersten Fixierelements (40a) von einer der Spindelmutter (30) abgewandten Seite der zweiten Schiene (14) her, durch die erste Durchgangsöffnung (14a) hindurch, in die Spindelmutter (30),
d) Einsetzen eines zweiten Fixierelements (40b) von einer der Spindelmutter (30) abgewandten Seite der zweiten Schiene (14) her, durch die zweite Durchgangsöffnung (14b) hindurch, in die Spindelmutter (30),
**dadurch gekennzeichnet, dass**
wenigstens eines der beiden Fixerelemente (40a, 40b) in einem Übergangsbereich zwischen einem Schaft (42) und einem Kopfabschnitt (44) einen Konus (46) aufweist, wobei sich das wenigstens eine Fixierelement (40a, 40b) beim Einsetzen des Fixierelements (40a, 40b) in die zugeordnete Durchgangsöffnung (14a, 14b) mittels des Konus (46) selbst zentriert, und der Konus (46) des Fixierelements (40a, 40b) eine Kontaktkante eines Randbereichs der zugeordneten Durchgangsöffnung (14a, 14b) verformt.

12. Verfahren gemäß Anspruch 11, wobei das Einsetzen des ersten Fixierelements (40a) und/oder des zweiten Fixierelements (40b) ein Einschrauben in die Spindelmutter (30) umfasst.

13. Fahrzeugsitz (1) mit einem Längseinsteller (10) gemäß einem der Ansprüche 1 bis 10.

14. Fahrzeugsitz (1) gemäß Anspruch 13, wobei der Längseinsteller (10) nach einem Verfahren gemäß einem der Ansprüche 11 oder 12 montiert ist.

## Claims

1. Longitudinal adjuster (10), having at least one pair of rails formed from a first rail (12) and a second rail (14), wherein the first rail (12) and the second rail (14), in particular in a longitudinal direction (x), are displaceable relative to each other, wherein the first rail (12) and the second rail (14), while forming an internal duct (16), mutually encompass each other, wherein disposed in the internal duct (16) are a spindle nut (30), connected to the second rail (14), and a spindle (20), operatively connected to the spindle nut (30), wherein disposed on the first rail (12) is a spindle drive (70) which is driveable by a motor (80) and interacts with the spindle (20), wherein the spindle nut (30) is fixed to the second rail (14) by a first fixing element (40a) and a second fixing element (40b),
**characterized in that**
the spindle nut (30) by the two fixing elements (40a, 40b) is centred perpendicularly to a longitudinal extent of the second rail (14) in a transverse direction (y), **in that** the first fixing element (40a) is fixed relative to a first through opening (14a), and the second fixing element (40b) is fixed relative to a second through opening (14b), wherein the first fixing element (40a) relative to the first through opening (14a), and the second fixing element (40b) relative to the second through opening (14b) are centred perpendicularly to the longitudinal extent of the second rail (14) in the transverse direction (y).

2. Longitudinal adjuster (10) according to Claim 1, wherein the first fixing element (40a) when being inserted into the first through opening (14a) is self-centred by a cone (46), both in a longitudinal direction (x) of the second rail (14) and perpendicularly thereto in a transverse direction (y).

3. Longitudinal adjuster (10) according to Claim 1 or 2, wherein the two fixing elements (40a, 40b) each have a shank (42), which has an external thread, and a head portion (44), wherein a transition region between the shank (42) and the head portion (44) has in each case one cone (46).

4. Longitudinal adjuster (10) according to any one of Claims 1 to 3, wherein the first through opening (14a) has a substantially square cross section with radiused corners.

5. Longitudinal adjuster (10) according to any one of Claims 1 to 4, wherein the second through opening (14b) has a substantially rectangular cross section with radiused corners.

6. Longitudinal adjuster (10) according to any one of Claims 1 to 5, wherein the dimensions of the two through openings (14a, 14b), perpendicular to the longitudinal extent of the second rail (14), are identical in the transverse direction (y).

7. Longitudinal adjuster (10) according to any one of Claims 3 to 6, wherein the cone (46) of the respective fixing element (40a, 40b) in a region contiguous to the respective head portion (44) has a diameter, wherein prior to assembling the fixing element (40a, 40b) the dimension of the respective through opening (14a, 14b), perpendicular to the longitudinal extent of the second rail (14), is slightly smaller in the transverse direction (y) than the diameter of the cone (46).

8. Longitudinal adjuster (10) according to any one of Claims 3 to 7, wherein the dimension of the second through opening (14b) in the direction of the longitudinal extent of the second rail (14) is larger than the diameter of the cone (46) of the second fixing element (40b).

9. Longitudinal adjuster (10) according to any one of Claims 1 to 8, wherein the second fixing element (40b) in the second through opening (14b) has a clearance in the direction of the longitudinal extent of the second rail (14).

10. Longitudinal adjuster (10) according to any one of Claims 1 to 9, wherein a buffer (60) is disposed between the second rail (14) and the spindle nut (30) .

11. Method for assembling a longitudinal adjuster (10), the method comprising the following method steps:
a) providing a second rail (14), wherein the second rail (14) for fastening a spindle nut (30) has a first through opening (14a) and a second through opening (14b),
b) disposing the spindle nut (30) on the second rail (14),
c) inserting from a side of the second rail (14) that faces away from the spindle nut (30) a first fixing element (40a) through the first through opening (14a) into the spindle nut (30),
d) inserting from a side of the second rail (14) that faces away from the spindle nut (30) a second fixing element (40b) through the second through opening (14b) into the spindle nut (30),
**characterized in that**
at least one of the two fixing elements (40a, 40b) in a transition region between a shank (42) and a head portion (44) has a cone (46), wherein the at least one fixing element (40a, 40b) when inserting the fixing element (40a, 40b) into the assigned through opening (14a, 14b) is self-centred by the cone (46), and the cone (46) of the fixing element (40a, 40b) deforms a contact edge of a peripheral region of the assigned through opening (14a, 14b).

12. Method according to Claim 11, wherein the inserting of the first fixing element (40a) and/or of the second fixing element (40b) comprises screwing into the spindle nut (30).

13. Vehicle seat (1) having a longitudinal adjuster (10) according to one of Claims 1 to 10.

14. Vehicle seat (1) according to Claim 13, wherein the longitudinal adjuster (10) is assembled according to a method according to either of Claims 11 or 12.

## Revendications

1. Système (10) de réglage longitudinal, présentant au moins une paire de rails, qui est formée par un premier rail (12) et par un deuxième rail (14), le premier rail (12) et le deuxième rail (14) étant aptes à être déplacés l'un par rapport à l'autre, en particulier dans une direction longitudinale (x), le premier rail (12) et le deuxième rail (14) s'entourant mutuellement en formant un canal intérieur (16), un écrou de broche (30) relié au deuxième rail (14) et une broche (20) en liaison fonctionnelle avec l'écrou de broche (30) étant agencés dans le canal intérieur (16), une transmission de broche (70), apte à être entraînée au moyen d'un moteur (80) et coopérant avec la broche (20), étant agencée sur le premier rail (12), l'écrou de broche (30) étant fixé sur le deuxième rail (14) au moyen d'un premier élément de fixation (40a) et d'un deuxième élément de fixation (40b),
**caractérisé en ce que**
l'écrou de broche (30) est centré au moyen des deux éléments de fixation (40a, 40b) perpendiculairement à une extension longitudinale du deuxième rail (14) dans une direction transversale (y), **en ce que** le premier élément de fixation (40a) est fixé par rapport à une première ouverture de passage (14a) et le deuxième élément de fixation (40b) est fixé par rapport à une deuxième ouverture de passage (14b), le premier élément de fixation (40a) étant centré par rapport à la première ouverture de passage (14a) et le deuxième élément de fixation (40b) étant centré par rapport à la deuxième ouverture de passage (14b) perpendiculairement à l'extension longitudinale du deuxième rail (14) dans la direction transversale (y).

2. Système (10) de réglage longitudinal selon la revendication 1, dans lequel le premier élément de fixation (40a), lors de son insertion dans la première ouverture de passage (14a), s'auto-centre au moyen d'un cône (46) aussi bien dans la direction longitudinale (x) du deuxième rail (14) que perpendiculairement à celle-ci dans la direction transversale (y).

3. Système (10) de réglage longitudinal selon la revendication 1 ou la revendication 2, dans lequel les deux éléments de fixation (40a, 40b) comprennent chacun une tige (42) présentant un filetage extérieur et une section de tête (44), une zone de transition entre la tige (42) et la section de tête (44) comprenant un cône (46) respectif.

4. Système (10) de réglage longitudinal selon l'une des revendications 1 à 3, dans lequel la première ouverture de passage (14a) présente une section transversale sensiblement carrée avec des coins arrondis.

5. Système (10) de réglage longitudinal selon l'une des revendications 1 à 4, dans lequel la deuxième ouverture de passage (14b) présente une section transversale sensiblement rectangulaire avec des coins arrondis.

6. Système (10) de réglage longitudinal selon l'une des revendications 1 à 5, les dimensions des deux ouvertures de passage (14a, 14b) étant identiques perpendiculairement à l'extension longitudinale du deuxième rail (14) dans la direction transversale (y).

7. Système (10) de réglage longitudinal selon l'une des revendications 3 à 6, dans lequel le cône (46) de l'élément de fixation respectif (40a, 40b) présente un diamètre dans une zone adjacente à la section de tête respective (44), la dimension de l'ouverture de passage respective (14a, 14b) perpendiculaire à l'extension longitudinale du deuxième rail (14) dans la direction transversale (y) étant, avant le montage de l'élément de fixation (40a, 40b), légèrement inférieure au diamètre du cône (46).

8. Système (10) de réglage longitudinal selon l'une des revendications 3 à 7, dans lequel la dimension de la deuxième ouverture de passage (14b) dans la direction de l'extension longitudinale du deuxième rail (14) est supérieure au diamètre du cône (46) du deuxième élément de fixation (40b).

9. Système (10) de réglage longitudinal selon l'une des revendications 1 à 8, dans lequel le deuxième élément de fixation (40b) présente un jeu dans la deuxième ouverture de passage (14b) dans la direction de l'extension longitudinale du deuxième rail (14).

10. Système (10) de réglage longitudinal selon l'une des revendications 1 à 9, dans lequel un tampon (60) est agencé entre le deuxième rail (14) et l'écrou de broche (30).

11. Procédé de montage d'un système (10) de réglage longitudinal, le procédé présentant les étapes de procédé suivantes :
a) préparation d'un deuxième rail (14), le deuxième rail (14) présentant une première ouverture de passage (14a) et une deuxième ouverture de passage (14b) pour la fixation d'un écrou de broche (30),
b) mise en place de l'écrou de broche (30) sur le deuxième rail (14),
c) insertion d'un premier élément de fixation (40a) dans l'écrou de broche (30) à partir d'un côté du deuxième rail (14) opposé à l'écrou de broche (30), à travers la première ouverture de passage (14a),
d) insertion d'un deuxième élément de fixation (40b) dans l'écrou de broche (30) à partir d'un côté du deuxième rail (14) opposé à l'écrou de broche (30), à travers la deuxième ouverture de passage (14b),
**caractérisé en ce que**
au moins l'un des deux éléments de fixation (40a, 40b) présente un cône (46) dans une zone de transition entre une tige (42) et une section de tête (44), ledit au moins un élément de fixation (40a, 40b) s'autocentrant lors de l'insertion de l'élément de fixation (40a, 40b) dans l'ouverture de passage (14a, 14b) associée au moyen du cône (46), et le cône (46) de l'élément de fixation (40a, 40b) déforme un bord de contact d'une zone de bordure de l'ouverture de passage (14a, 14b) associée.

12. Procédé selon la revendication 11, dans lequel la mise en place du premier élément de fixation (40a) et/ou du deuxième élément de fixation (40b) comprend un vissage dans l'écrou de broche (30).

13. Siège de véhicule (1) comportant un système (10) de réglage longitudinal selon l'une des revendications 1 à 10.

14. Siège de véhicule (1) selon la revendication 13, dans lequel le système (10) de réglage longitudinal est monté selon un procédé selon l'une des revendications 11 ou 12.
